# EUROPEAN PATENT APPLICATION

(11) **EP 3 486 851 A1**
(43) Date of publication of application: **22.05.2019**
(21) Application number: 18214240.6
(22) Date of filing: 06.10.2015
(51) Int. Cl.: G06Q 20/20, G06Q 20/38, G06Q 30/02, G06Q 20/02, G06Q 20/40, G06Q 20/34, G06Q 30/06

(54) **APPARATUS, SYSTEM AND METHOD OF TOKENISATION OF PAYMENT CARD DATA**

(30) Priority: 06.10.2014 GB 201417624; 06.01.2015 GB 201500128; 22.01.2015 GB 201501070
(62) Divisional of application: 15775691.7
(71) Applicant: Emo Oil Ltd, Co. Laoise (IE)
(72) Inventor: JORDAN, Benjamin Marcus, Leeds, Yorkshire LS16 6QY (GB); STENSON, Niklas Olov, 602 23 Norrköping (SE)
(74) Representative: Potter, Julian Mark

(57) **Abstract**

A system for enhancing payment card data security comprising a card payment terminal compliant with a security requirement for payment cards and a processing environment non-compliant with a security requirement for payment cards is disclosed. The compliant card payment terminal is configured to generate a token from a payment card data presented to the card payment terminal and transmit the token and a set of transaction parameters to the data processing environment non-compliant with a security requirement for payment cards. The non-compliant data processing environment is configured to receive the token identifying a security specification comprising at least one security parameter associated with the token and receive the set of transaction parameters and determine whether the transaction parameters submitted to the non-compliant data processing environment satisfy the at least one identified security parameter and provide a response to the compliant card payment terminal comprising the determination. The compliant card payment terminal is configured to initiate fulfilment of the transaction submitted to the compliant card payment terminal satisfying the at least one security parameter.

## Description

### Field

The present invention relates to an apparatus, system and method for inhibiting fraudulent payment card transactions. In particular, but not exclusively, the present invention relates to tokenisation of payment card data and a system and method for generating and storing tokens together with associated payment card user parameters.

### Background

Payment systems for goods and services using a payment card such as a credit account card or debit card for a bank account are ubiquitous. Such payment cards are typically provided in Europe by three main operators: EuroPay; MasterCard; and Visa; hereinafter designated EMV. Additionally, other cards, herein referred to as "purchase cards", are provided which effectively charge a purchase to an account without any transfer of value at the point of obtaining the good or service, with settlement of the account occurring at a later date. Such purchase cards may be considered to be a form of account card which sets purchases against a particular account rather than making payment for a purchase. A particular example of such account cards are "fuel cards" used for the purchase of fuel by drivers of vehicles operating within a vehicle fleet, for example, and wherein settlement of the fuel purchases is performed by the owner of the fleet at some convenient time, for example at monthly intervals. The operator of the fuel card account system invoices its customers, typically the owner of the fleet, at appropriate time intervals.

Use of an EMV payment card invokes a transfer of value at the time of purchase and consequently in many jurisdictions a receipt is necessary for the purchase, in particular because it, or issue of one that, contains sufficient details of the good or service purchased and the value of the purchase to check that sales tax applied to the purchase is appropriate. Conventionally, receipts are provided in paper form and it is necessary to ensure that sufficient paper is available at a payment terminal for a receipt to be issued. This is inconvenient and time-consuming for manned payment terminals. However, if a payment terminal is unmanned and particularly if it is in a remote location maintaining sufficient paper in the payment terminal to provide receipts is a significant overhead and worse still if insufficient paper is provided purchases may not be made and goods and services not dispensed depending upon local laws and regulation.

Many challenges exist in handling sensitive data, such as EMV payment card numbers, bank account numbers and the like. Typically, in use, a system for processing such sensitive data will transmit the sensitive data between multiple authorised entities, any of which can store the sensitive data. Sensitive data is vulnerable in such an environment to interception by unauthorised entities at multiple points, such as during transmission between authorised entities or while stored at an authorised entity.

To prevent unauthorised access to sensitive data, steps can be taken to protect the sensitive data. Such data protection measures are required by many jurisdictions for various categories of sensitive data. The sensitive data can be encrypted during transmission or storage using an encryption algorithm and encryption key. However, encryption can be overcome/broken using a variety of hacking methods, and the use of encryption in financial systems is often subject to resource intensive audit requirements. Data storage security measures can be implemented while the sensitive data is stored at an authorised entity, but such storage security measures generally protect against intrusion and do not protect the sensitive data after an unauthorised entity has overridden or bypassed the storage security measures. In addition, sensitive data becomes vulnerable to interception in the event that an associated payment card is lost or stolen.

Additionally, EMV payment cards, as well as purchase cards, may have their card details copied rather than stolen. Something that is colloquially known as "skimming" because the card details typically are acquired by passing the card through a card reading device so that the magnetic strip on a card and/or the details contained in a microchip embedded in the card may be read. The term "skimming" refers to the physical process of passing a card through a card reader. A non-genuine card reader for skimming cardholder's cards may be placed immediately in front of genuine card reader card insertion slot so that as a user attempts to use the genuine card reader there card details are read by the non-genuine card reader as their card passes through it ("skimmed"). A card may be "skimmed" simply by the card being handed over to an assistant at a merchant location on the pretence of the assistant placing the card in the payment card terminal and the assistant passing the card through a non-genuine card reader device to acquire the card details.

Aspects and embodiments in accordance with the present invention were devised with the foregoing in mind.

### Summary

Viewed from a first aspect, there is provided a method for enhancing payment card data security comprising:
generating at a terminal compliant with a security requirement for payment cards a token from a value transfer card data;
providing the token to a data processing environment non-compliant with a security requirement for payment cards;
associating with the token a security specification defining at least one security parameter for the value transfer card; and
storing the token and security specification in the non-compliant data processing environment.

Viewed from a second aspect there is provided a terminal for enhancing value transfer card data security, the terminal configured to:
generate in a data processing environment compliant with a security requirement for payment cards a token from a value transfer card data;
provide the token to a data processing environment non-compliant with a security requirement for payment cards;
associate with the token a security specification defining at least one security parameter for the value transfer card; and
store the token and security specification in the non-compliant data processing environment.

In one or more embodiments the at least one security parameter may be received at the non-compliant data processing environment from a user of the value transfer card. Thus a user may process, configure and setup a security specification themselves through relatively easily accessible processing environment as it is non-compliant with payment card security requirements. Typically, there is provided a value transfer card user interface to the non-compliant data processing environment for the value transfer card user to input the at least one security parameter to the non-compliant data processing environment.

The at least one security parameter may be received at the non-compliant data processing environment over the value transfer card user interface and the security specification configured with the at least one security parameter thereby creating or modifying the security specification.

Beneficially, the value transfer card comprises a payment card and generation of the token takes place in a data processing environment compliant with a security requirement for payment cards. In this way, a payment card such as a credit card or debit card may be tokenised in a payment terminal, i.e. payment card security compliant data processing environment, and the token transmitted to a non-compliant environment to determine compliance of one or more transaction with the security specification.

Viewed from a third aspect there is provided a method for authorising a value transfer card transaction, the method, carried out in a data processing environment non-compliant with a security requirement for payment cards, comprising:
receiving a token derived from a value transfer card details input to a value card reader for execution of a transaction;
identifying a security specification comprising at least one security parameter associated with the token;
receiving at least one transaction parameter corresponding to the transaction;
determining whether the at least one transaction parameter submitted to the non-compliant data processing environment satisfies the at least one identified security parameter; and
providing a response to the a value card reader comprising the determination.

Viewed from a fourth aspect there is provided a terminal for authorising a value transfer card transaction, the terminal comprising a data processing environment non-compliant with a security requirement for payment cards and configured to:
receive a token derived from a value transfer card details input to a value card reader for execution of a transaction;
identify a security specification comprising at least one security parameter associated with the token;
receive at least one transaction parameter corresponding to the transaction;
determine whether the at least one transaction parameter submitted to the non-compliant data processing environment satisfies the at least one identified security parameter; and
provide a response to the a value card reader comprising the determination.

Suitably, transmission of a message to a user of the value transfer card is initiated, wherein the message invites a response to authorise or inhibit fulfilment of the transaction. Thus a card user may decide whether or not to authorise a transaction falling outside the security specification, for example if they are confident the transaction is genuine such as one they are conducting.

Fulfilment of the transaction with the value transfer card submitted to the value transfer card reader may be inhibited in response to receiving, at the non-compliant data processing environment, a message from a user of the payment card comprising an indication that the transaction is unauthorised. In this way a card user may stop a transaction which they do not recognise as genuine or wish to be fulfilled.

In one or more embodiments fulfilment of the transaction may be initiated prior to a determination whether or not the transaction parameters submitted to the non-compliant data processing environment satisfy the at least one security parameter associated with the token. In such an embodiment, a transaction may be confirmed as authorised or not thereby providing the opportunity for the operator of the card to cancel the card in the event a fulfilled transaction is confirmed as not authorised.

Viewed from a fifth aspect there is provided a system comprising a terminal as set forth above and comprising the value card reader, the value card reader configured to generate the token from the value transfer card details input to the value card reader for execution of the transaction and to transmit the token and the at least one transaction parameter to the non-compliant data processing environment.

In one or more embodiments the value transfer card may comprise a payment card and the value card reader further comprise a data processing environment compliant with a security requirement for payment cards and configured to generate the token from payment card details input to the card reader. One or more embodiments in accordance with one or more of the first to fifth aspects may provide an arrangement and provide for a process which may minimise or at least reduce unauthorised use of cardholder data and reduce cross channel fraud for card-not-present transactions, as well as in transaction environments that combine elements of card-present and card-not-present transactions.

Additionally, an embodiment in accordance with one or more of the first to fifth aspects provide an arrangement in which security parameters associated with a payment card may be configured in a non-PCI DSS compliant data processing environment, for example an environment which would allow an individual customer access to the relevant records to adjust the security parameters for themselves.

Typically, a security specification defining a parameter for the payment card is stored in association with a customer identifier such that when a customer is identified with the token the security specification is automatically applied to the token.

Suitably, the customer identifier is stored in association with a token value to provide easy identification of a token and associated security parameters.

Typically, the security specification and token are stored in respective fields of respective and are linked by an associated customer identification record which is a suitable way of storing information. In one or more particular embodiments the customer identification record provides sub-fields for the security specification for storing a respective types of security parameters.

Typically, initiating fulfilment of the purchase comprises transmitting transaction details for the purchase to a merchant acquirer for the payment card.

In accordance with an arrangement for protecting and restricting use of a card, one or more embodiments in accordance with the third, fourth and fifth aspects may inhibit a transaction with the payment card for a purchase submitted to the value transfer card reader or payment terminal being identified by a user as not satisfying the one or more security parameters, i.e. the user responding to the message requesting confirmation of authorisation with a non-authorisation indication.

Typically, one or more embodiments are configured to initiate fulfilment of the purchase by transmitting transaction details for the purchase to a merchant acquirer for the payment card for a user indication authorisation of the transaction.

Typically, the terminal is a payment card terminal.

### List of Figures

A detailed description of one or more embodiments in accordance with the invention will now be described, by way of non-limiting example only, and with reference to the accompanying drawings, in which:
Figure 1 is a schematic illustration of an overview of a conventional payment card system;
Figure 2 is a schematic illustration of an overview of a system in accordance with an embodiment of the invention;
Figure 3 is a process flow control diagram of the overall operation of an embodiment in accordance with the invention;
Figure 4 is a schematic illustration of a payment terminal comprising apparatus in accordance with an embodiment of the invention;
Figure 5 is a process flow control diagram for a card reader sub-module in accordance with an embodiment of the invention;
Figure 6 is a process flow control diagram for a registration sub-module in accordance with an embodiment of the invention;
Figure 7 is a schematic illustration of a table structure in a relational database in accordance with an embodiment of the invention;
Figure 8 is a process flow control diagram or an embodiment in accordance with the invention for enhancing security of a payment card;
Figure 9 is a process flow control diagram for an embodiment in accordance with the invention for enhancing security of a payment card;
Figure 10 is a process flow control diagram for a registration sub-module in accordance with an embodiment the invention for supporting registration of a further card for an existing user.

### Description

Payment cards and payment card systems are well-known and indeed ubiquitous in the developed economies. Given that the systems process bank and credit card details the systems and apparatus need to be secure and payment card operators such as EuroPay, MasterCard and Visa (EMV) follow the Payment Card Industry Data Security Standard (PCI DSS) guidelines to implement security measures to reduce the loss or theft of sensitive cardholder data amongst other things. The PCI DSS guideline security measures for payment card terminals and systems include encryption of card holder data for transmission across open, public networks and in particular the Primary Account Number (PAN) is required to be stored in unreadable form utilising encryption, one-way hashing and tokenisation techniques, (see PCI DSS requirement 3.4).

In light of the PCI DSS security measures, systems and apparatus for processing and storing card holder data can be expensive to implement and maintain.

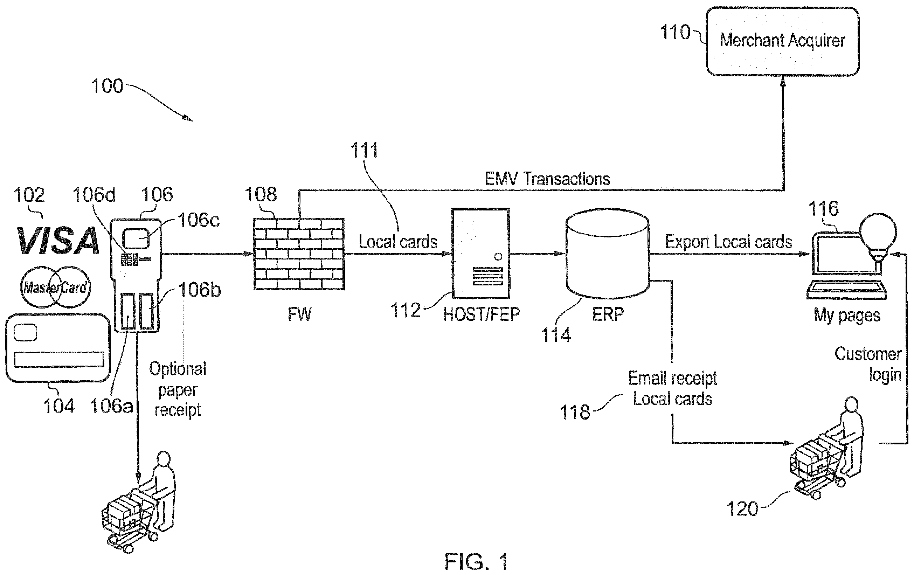

Referring now to Figure 1, an example of a conventional card payment system 100 is schematically illustrated which is operative for EMV payment cards 102 and also purchase cards 104. A payment terminal 106 includes a card payment module 106a, a Point of Sale (POS) module 106b, a display screen 106c and a keypad 106d. The terminal may be configured as an automatic teller machine (ATM) so that a user may withdraw funds from an account. Optionally, the payment terminal may be an outside payment terminal (OPT) so that a user may pay for fuel by card at, for example, an unmanned fuel dispensing apparatus or the payment terminal 106 may be inside such as in a kiosk or shop (an inside payment terminal IPT).

The payment terminal 106 is networked to a communications network which may be a private network but typically would also include open, public telecommunications networks for long distance communications, in particular if communicating data using the Internet. The network communication is through a firewall 108 which assists in protecting the payment terminal 106 and any local network of which it may form a part from malevolent communications and attacks from outside the payment terminal 106 or local network.

The system 100 includes an EMV Merchant Acquirer 110 which is a financial services institution such as a bank and receives payment card cardholder details to effect payment. In the described system there is also a server system 112 comprising an application server for a purchase card scheme and to which purchase card details are provided so that an invoice may be generated at the OPT or the value entered into an account for that purchase card. The server system 112 also includes electronic storage systems. Server system 112 may host a purchase card scheme data processing application 114 which amongst other things may transmit transaction details to a transactions webserver 116 which may be accessed by purchase card users 120 or account managers to monitor purchases. The purchase card scheme data processing application 114 may also provide electronic receipts 118 which are emailed to purchase card users 120. The purchase details transmitted to the transactions webserver 116 may be in the form of electronic receipts. A user/customer may access a webpage 'my pages' 116 to view their receipts and also account information.

Optionally or additionally the transaction web server 116 may provide the electronic receipt to the user/customer by email. The purchase card scheme data processing application 114 may also manage a database implemented on the electronic storage systems. The purchase card scheme data processing application may include, comprise or be functionally operable with an Enterprise Resource Planning (ERP) application. The ERP application is business management software - usually a suite of integrated applications - that an enterprise can use to collect, store, manage and interpret data from many sources such as other enterprises and users such as customers.

The operator of the purchase card scheme can maintain a record of transactions made by respective cards in the scheme and store payment details in a manner that need not be PCI DSS compliant because such purchase card schemes do not authorise a transfer of actual value and do not fall under the PCI DSS guidelines. For example, cardholder details need not be encrypted and the storage system need not be as secure as required by the PCI DSS guidelines. As non-PCI DSS compliant systems are less complex to build and maintain they are cheaper to implement.

However, the operator of the card scheme does not retain information concerning the purchase in which the EMV card was used. Consequently, benefits that may be offered to users of the purchase card scheme, such as discounts for volume purchases and other inducements to use the purchase card or purchase particular goods or services, cannot be provided to EMV card users based on transactions using their EMV card and using the card scheme operator's systems 112/114. If such information were to be used by the card scheme operator their systems 112/114 would have to be PCI DSS compliant with all the attendant costs of setting up and maintaining such PCI DSS compliant systems.

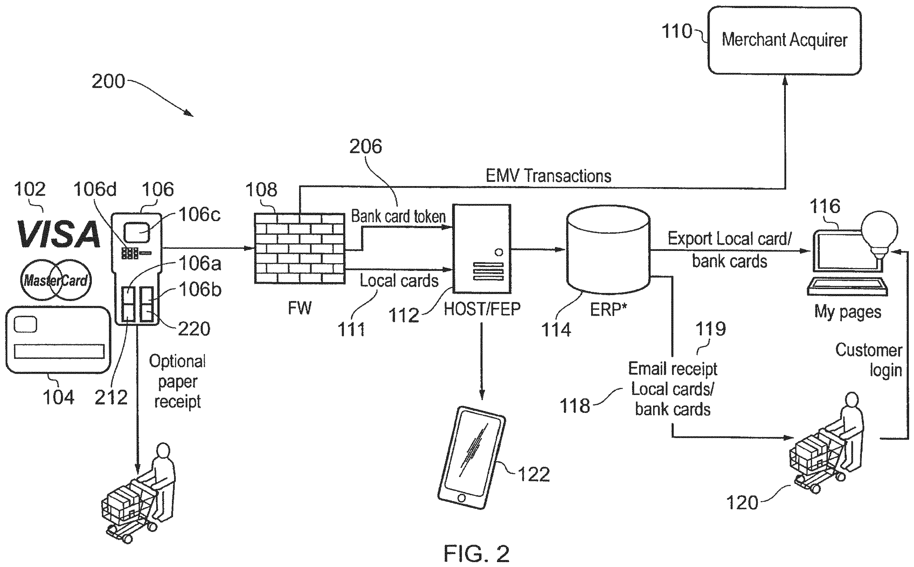

A system 200 implementing an embodiment in accordance with the invention is schematically illustrated in Figure 2. Like numerals designate like parts illustrated in Figure 1 as the context requires. The system 200 may provide for purchases using EMV cards 102 or purchase cards 104 through a payment terminal 106. The card payment module 106a includes a tokenisation sub-module 212 which comprises programmatic instructions executable to tokenise one or more elements of EMV cardholder data. The POS module 106b includes a registration sub-module 220 which comprises programmatic instructions executable for registering an EMV cardholder into a scheme which may provide purchase details, such as receipts, electronically and/or benefits such as a loyalty scheme.

The system 200 also includes a firewall 108 through which communication is made to EMV Merchant Acquirer 110 and server system 112 hosting the purchase card data processing application 114. The server system 112 is also coupled to a communications network in such a way to enable communication with a mobile device 122. The payment terminal 106 not only transmits EMV cardholder data or purchase cardholder data to the EMV Merchant Acquirer 110 and server system 112 respectively but also transmits a token 206 derived from one or more elements of the EMV cardholder details. EMV token 206 is generated in such a way that it is decoupled from the cardholder data from which it is derived, i.e. the cardholder data is not evident from the token 206, and is therefore not required to be handled in a PCI DSS compliant manner.

EMV token 206 may be stored in the server system 112/114 with EMV cardholder data (excluding the full card account number) and processed without PCI DSS compliant procedures.

The purchase card scheme data processing application 114 provides electronic transaction details to webserver 116 and/or electronic receipts 118 which are emailed to purchase card users 120 as in system 100. However, in the described embodiment EMV receipts 119 may also be provided to users 120 who paid with an EMV card by linking the token 206 with acquired cardholder details and the transaction that took place with the tokenisation. As illustrated in Figures 1 and 2, purchase cards transactions are referenced as "local cards".

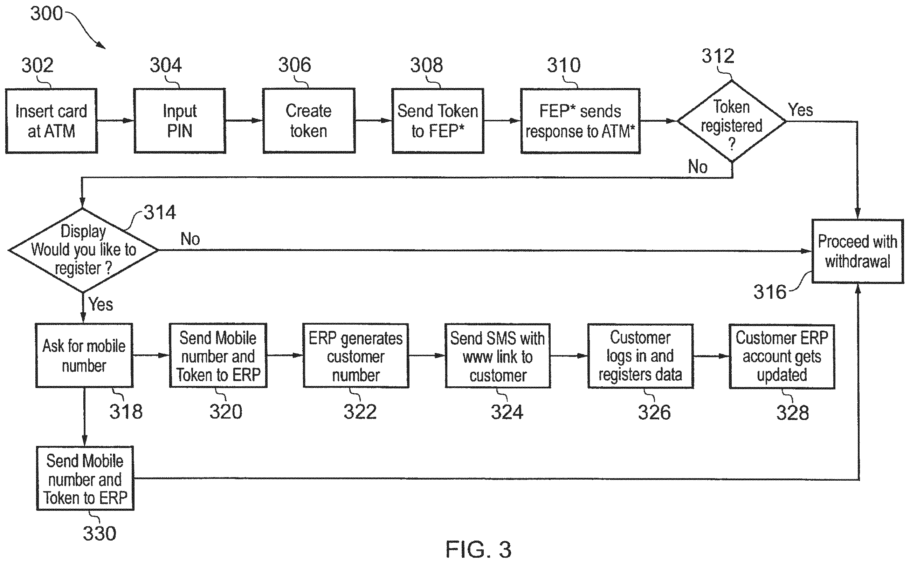

A general overview of a registration procedure 300 at a payment terminal 106 in accordance with an embodiment of the invention will now be described with reference to the process flow control diagram of Figure 3.

A customer 120 inserts an EMV payment card 102 at a payment terminal 106, step 302, and inputs a PIN in response to an authorisation request at step 304, and a token 206 based on the EMV payment card details is created, step 306. In the described embodiment, the payment terminal 106 is a part of an automatic teller machine (ATM). However, in another embodiment, the payment terminal may be an outside payment terminal (OPT) or an inside payment terminal (IPT). Such payment terminals may be manned or unmanned.

The token 206 is transmitted to the front end processor (FEP) and is received by a purchase card scheme data processing application 114 on server system 112, step 308, which responds to acknowledge the transmission of the token 206, step 310. In the described embodiment, the purchase card scheme data processing application comprises an enterprise resource planning (ERP) management software capable of processing, storing and managing data received from multiple ATM's.

The purchase card scheme data processing application 114 then checks in the database to determine if the token 206 has already been registered, i.e. the customer is already a user, step 312, and if so sends a message to the ATM to proceed with the cash withdrawal, step 316, or other function instructed through the ATM. If at step 312 it is determined that the token 206 has not yet been registered then a message is transmitted to the ATM to initiate a question being presented to the user interface asking if the customer 120 would like to register the token 206, step 314. If the customer response indicates "No" then the ATM proceeds with the withdrawal without further action concerning registration, 316. However, if the customer 120 inputs a response indicating "Yes" then a request is made for the customers mobile telephone number, step 318. Following input of the mobile telephone number the mobile telephone number and the token are transmitted to the purchase card scheme processing application 114 at step 320.

At step 322, the purchase card scheme data processing application 114 generates a customer user identity (user ID) in response to receiving the mobile telephone number and token 206and sends a Short Message Service (SMS) message comprising a URL link to the purchase card scheme data processing application 114 to the customer 120, step 324.

Responsive to receiving the SMS message with the URL link, the customer 120 may use the link to login to the purchase card scheme data processing application 114 and register their personal data, step 326. The customer 120 may also configure the purchase card scheme data processing application 114 to specify security parameters to be associated with the token 206 as will be described below. The purchase card scheme data processing application 114 account for that customer 120 is updated with personal data and the token 206, step 328. Additionally, the ATM proceeds with the withdrawal, step 316.

In an optional embodiment an additional security check may be carried out by the bank to verify the validity of the link between the token 206 and the registered mobile telephone number. The additional security check may include challenge response authentication procedures comprising a request to the user to input, via the registered mobile, a valid answer to a previously defined question in order to be authenticated. As will be apparent to a person of ordinary skill in the art, any number of challenge response protocols may be invoked to authenticate the link between the token 206 and the registered mobile telephone number such as password or PIN authentication, wherein the password or PIN is created and associated with the customer as part of the creation process of the card by the bank. In another example, registration of the token initiates the bank to request a PIN or password be entered via the registered mobile number, wherein the bank sends a 'one time' PIN or password to the card users registered address, e.g.. home street address, thereby authenticating the customer as the card user.

In this way, unauthorised users who have gained access to customers card details prior to the customer registering the token with the purchase card scheme data processing application are prevented from registering an unauthorised mobile telephone number in association with the token.

In an optional embodiment, the additional security check may be required to activate the purchase card scheme application account for the customer 120.

In the described embodiment, the security parameters may limit the use of the payment card data by business identity (a particular store etc.), by geographical location (e.g. a particular city or country), by business type (e.g. petrol garage, retail store etc.), by date (e.g. day of the week, month or a particular date etc.) or by frequency of purchase/ withdrawal request.

The security parameters associated with a token defines a security specification for that token. The parameters themselves may be input by a customer defining their own specification allowing them to set their own level of liability, or put another way, their own level of security. Typically, the parameters will be input through a suitable user interface operated from a computing device in communication with the purchase card scheme application 114. Such parameters may be selectable from a menu or list of parameters or definable within a predefined field.

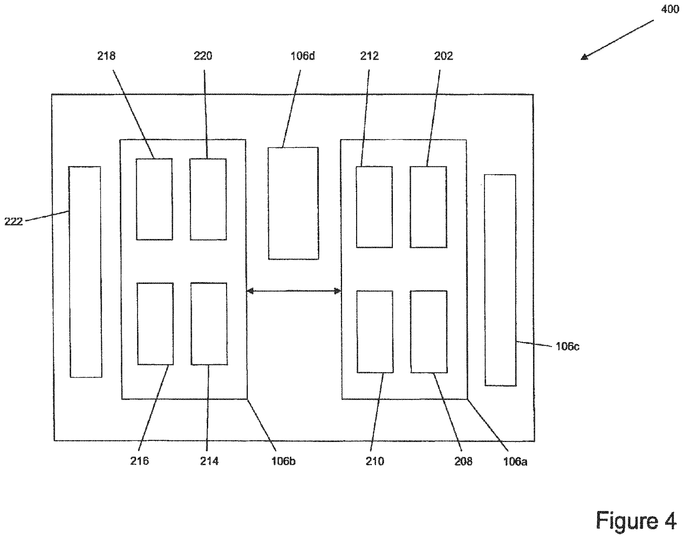

A payment terminal 106, part of an ATM, in accordance with an embodiment of the invention will now be described with reference to Figure 4. Payment terminal 106 includes a card reader module 106a, a registration module 106b and a display 106c. A payment terminal 106 also includes a network interface 222 for communicating with a communications network such as a private network or public telecommunications network.

Card reader module 106a includes a card reader 202 under the control of a controller 208. Typically, controller 208 comprises a microcontroller or microprocessor operative to execute programmatic instructions supplied to it. The card reader module 106a also includes a display driver 210 for supplying display signals to display 106c under the control of controller 208 during operation of the card reader 202 and other aspects of the card reader module 106a.

Card reader module 106a also includes a tokenisation sub-module 212.

In operation, an EMV payment card 102 is input into the card reader 202 and the cardholder account details read from the card under the control of controller 208. Card reader module 106a is therefore PCI DSS compliant because cardholder account details are processed within the module. Such a card reader module 106a may be referred to as a High Security Module (HSM) in PCI DSS terminology. Cardholder account details are encrypted, in particular for transmission from the card reader module 106a across an open network, although encryption may be used for closed networks also, within the card reader module 106a. Encryption, and possibly tokenisation, utilises cryptographic keys which are kept securely within the card reader module 106a. Cryptographic keys are supplied by the organisations who wish to encrypt the data, for example the financial institution, EMV Merchant Acquirer 110, operating a particular payment card 102. A token may be reversible or non-reversible, i.e. there is or there is not a way back to the details from which it was derived. Although for a practical matter EMV card readers may use cryptographic techniques to tokenise card details it is the case that card details may be tokenised without using cryptographic techniques. A discussion of encryption and tokenisation may be found at the following URL: https://townsendsecuritv.com/sites/default/files/Encryption vs Tokenization.pdf

In the described embodiment, the purchase card scheme operator supplies a key, cryptographic or otherwise or other algorithmic parameter, for use in tokenisation sub-module 212 for generating the payment card details token 206. The cryptographic key supplied by the purchase card scheme operator must be PCI DSS compliant but may be relatively easily obtainable through an existing financial services institution or EMV payment card operator already PCI DSS compliant. The tokenisation algorithm is "one way" because it is not necessary within the purchase card operator's system to be able to decrypt or reverse the token to generate the payment card details. Indeed, it is highly undesirable in the purchase card scheme system to be able to decrypt or reverse the token to generate the payment card details.

The POS module 106b includes a controller 214, a display driver 216, a POS operations sub-module 218 and a registration sub-module 220. The POS module 106b is also connected to the network interface 222. The POS operations sub-module 218 provides programmatic instructions to controller 214 to implement a point-of-sale module, including amongst other things instructing display driver 216 to display information concerning a purchase such as quantity, volume and/or total cost, for example.

The registration sub-module 220 comprises programmatic instructions executable by controller 214 to implement the token registration process described in general outline above with reference to Figure 3.

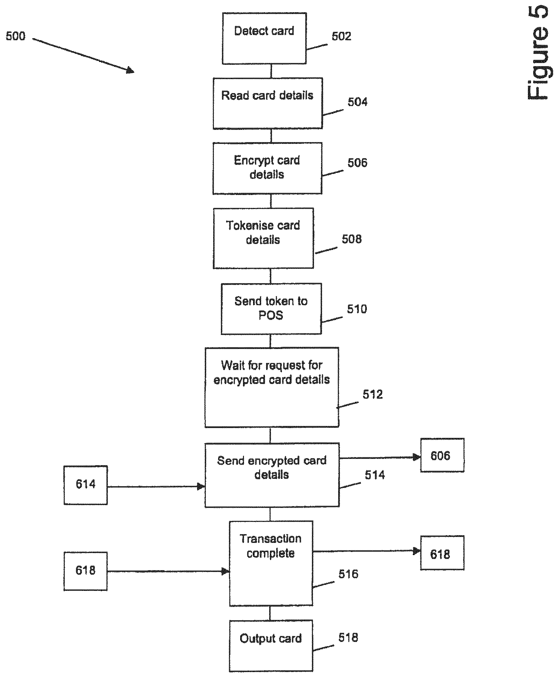

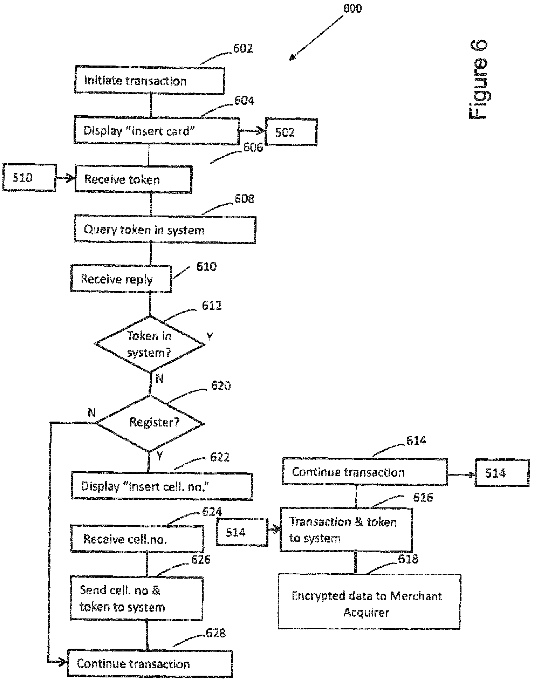

The operation of the card reader module 106a and the point of sale module 106b in accordance with an embodiment of the invention will now be described with reference to the process flow control diagrams 500 and 600 illustrated in Figures 5 and 6 of the accompanying drawings. The respective sub-modules of the card reader and point-of-sale modules interact and work with each other as will now be described.

Referring now to Figure 6, point of sale sub-module 218 provides programmatic instructions to controller 214 to initiate a transaction, step 602, by displaying on display 106c a message inviting a user to insert their payment card, step 604. Referring now to Figure 5, process control flows to step 502 where card reader sub-module 202 provides programmatic instructions to controller 208 to detect a card input to the card reader 106a. The card reader sub-module 202 provide instructions to controller 208 to read the card details, step 504, and then encrypt the card details, step 506. As part of the encryption process, or as a separate stage, the card details are "tokenised", step 508, responsive to instructions from the tokenisation sub-module 212. Tokenisation of the card details comprises generating a string of characters from one or more of the card details. For example, the string of characters may be generated from the cardholder account number and in general the string of characters are random or at least pseudo-random. In general, the token would be a non-reversible token because in the context of embodiments in accordance with the present invention it is not necessary to be able to reverse back to card details. Examples of how tokenisation may be used in a PCI DSS compliant environment may be found in the PCI Security Standards Council Information Supplement: PCI DSS Tokenisation Guidelines.

Controller 208 then sends the EMV token to the point of sale module 106b responsive to instructions from the tokenisation sub-module 212, at step 510. Controller 208 then waits for a request to send the encrypted card details to the point of sale module 106b, step 512. Process control then flows to step 606.

Registration sub-module 220 of the point-of-sale module 106b provides programmatic instructions for controller 214 to receive the EMV token 206 from card reader module 106a, step 606, and send a query over network interface 222 to the purchase card scheme operator server 112 concerning whether or not the token already exists in the purchase card scheme operator's system, step 608. Registration sub-module 220 provides instructions to controller 214 to wait for and receive a reply from the purchase card scheme operator's system concerning whether or not the token already exists in the system, step 610.

At step 612 controller 214 determines whether or not the reply indicates the token is in the system or not. If the token is already in the system then process flow control proceeds to step 614 where the transaction is continued. Process control flows to step 514 where encrypted card details are sent to the POS module 106b and returns to step 616 where the transaction details and token are transferred to the purchase card scheme operator's system, and then encrypted card data is transferred to the merchant acquirer 110, step 618. Process flow control then transfers to step 516 where the card reader module determines that the transaction is complete and outputs the card, step 518.

If it is determined at step 612 that the token is not already in the purchase card scheme operator's system process flow control proceeds to step 620 where controller 214 is provided with instructions from registration sub-module 220 which cause a message to be displayed on the display 106c inviting the user to register with the purchase card scheme operator's system. If the user inputs a response, typically via keypad 106d, declining the invitation process control flows to step 628 and the transaction continues as normal.

If the user response is to accept the invitation to register then process control flows to step 622 where controller 214 executes instructions from the registration sub-module 220 to cause display driver 216 to provide signals to display an invitation to insert mobile telephone number on display 106c, step 622. Controller 214 receives from keypad 106d the mobile telephone number input by user, step 624 and sends the mobile telephone number and EMV token 206 over network interface 222 to the purchase card scheme operator's server 112.

The transaction then continues, step 628, and process control then flows to step 514 where encrypted card details are sent to the POS module 106b, which in turn transmits the encrypted card details to the merchant, step 618. Process control then flows to step 516 of the card reader module operation to complete the transaction and then the card is output from the card reader 106a, step 518.

While not all of the features of the system described in general outline above with reference to Figures 2, 3, 4, 5 and 6 may be required, the system may be utilised to provide enhanced security for the use of a credit/ debit or other EMV payment card for purchases.

The operation of the purchase card scheme application 114, in particular the database management services of the purchase card scheme application 114 concerning the creation of enhanced security parameters for a payment card 102 with tokenisation will now be described with reference to an example of the tables in a relational database structure in accordance with an embodiment of the present invention.

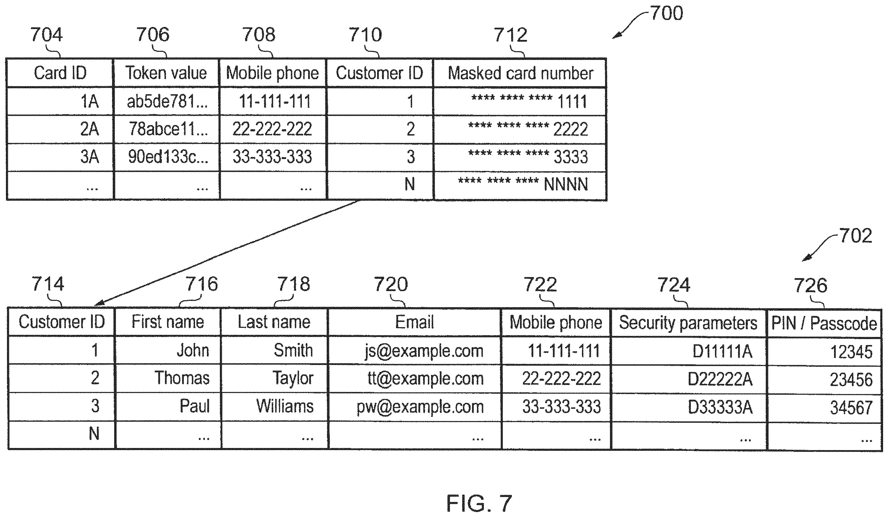

Illustrated in Figure 7 are two key tables for a database structure in accordance with the described embodiment. Each table will be referred to by its primary key. The database structure in Figure 7 includes a "Card ID" table 700 and a "Customer ID" table 702. The relationship between the respective tables through their primary keys is illustrated by the 'arrowed' line.

"Card ID" table 700 comprises 5 columns. The first column, 704, is the customer ID number, the second column, 706, is the token value used to replace the sensitive EMV payment card data, the third column, 708, is the mobile phone number associated with a particular token value, the fourth column, 710, is the customer ID and the final column is a masked card number where only the last 4 digits of the account are visible. When a card registration procedure is initiated, step 314 of the process flow control diagram of Figure 3, and the mobile telephone number and token are received by the purchase card scheme data processing application 114 running on server 112, step 308, a card ID is assigned to the data that is being registered and stored in column 704. In the described embodiment, the card IDs are assigned in sequence. The token value, 206, is stored in the token value column 706 with the associated mobile telephone number stored in mobile phone column 708. A customer ID is also assigned in sequence as new card ID's are registered, i.e. 1, 2, 3, ...N and stored in the customer ID column 710. Thus the basic card registration information is stored in the card ID table 700.

The purchase card scheme data processing application 114 is configured to send an SMS text message to the mobile phone number in column 708, step 324, providing a link such as a uniform resource locator (URL) to an entry in customer ID table 702, or to a webpage or other interface that allows a user to generate such an entry in the database keyed through primary key column 700 to the customer ID associated with the mobile telephone number in table 700. Through a suitable user interface, such as a webpage, the user is invited to input their first name, column 716, their last name, column 718, their email address, column 720, step 326. The customer 120 is also invited to select a set of security parameters to be associated with the EMV payment card, column 724, and to input a PIN/ password, column 726. The mobile phone associated with the user ID is stored in column 722. Thus, the database now includes personal information of a customer of the system keyed through a customer ID which is also included in table 700 and associated with the token value in column 706.

In the described embodiment, the data stored in column 724 contains identifiers that map to security parameter tables which contain security rules associated with a particular token.

The card ID is assigned sequentially as new token values are registered. The token value associated with the EMV payment card is stored in column 706. Additionally, the associated Customer ID is stored in column 710 and is linked to the primary key of customer ID table 702 thereby linking token values to security parameters.

As will be evident to persons of ordinary skill in the art, other tables may be utilised and indeed the tables in Figure 7 may be expanded upon to include more columns.

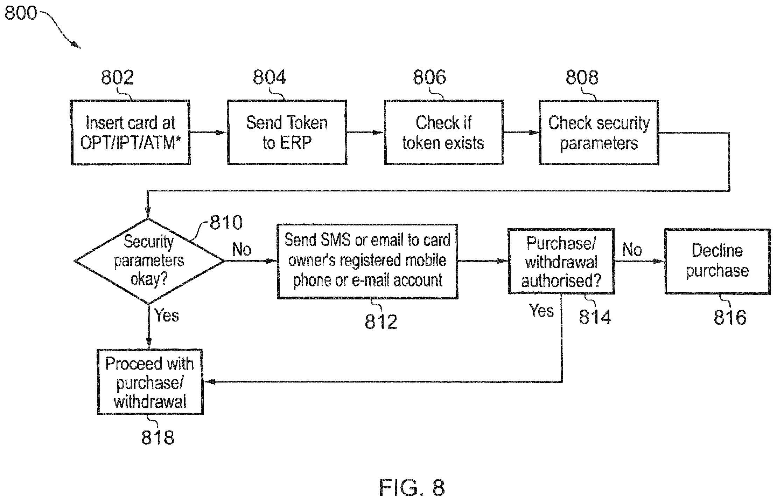

The operation of the purchase card scheme data processing application 114, in particular the management of a token with associated pre-transaction security parameters and the interface with a customer will now be described in accordance with an embodiment of the present invention 800 illustrated in Figure 8.

As will be apparent to a person of ordinary skill in the art, the steps illustrated in Figure 8 are distributed across the card reader module 106a, registration module 106b, purchase card operator server 112 and customer mobile device 122 illustrated in Figure 2 for example.

A customer inserts an EMV payment card at a payment terminal 106, step 802, and a token 206 based on the EMV payment card details is created and transmitted to the purchase card scheme data processing application 114 on server system 112, step 804. In the described embodiment the payment terminal is an Automatic Teller Machine (ATM). However, in another embodiment the payment terminal may be an Outside Payment Terminal (OPT) or an Inside Payment Terminal (IPT).

The relevant purchase/ withdrawal parameters, such as good or service or type of good or service (product/s), identification of retailer, geographic location or retailer, value of transaction etcetera are also transmitted to the purchase card scheme data processing application 114.

The purchase card scheme data processing application 114 then checks in the database at server 112 to determine if the token 206 has already been registered, i.e. the customer is already a user, step 806. If at step 806 it is determined that the token 206 has not yet been registered, a message is transmitted to the payment terminal 106 to initiate a question being presented to the user interface asking whether the customer 120 would like to register the token 206 or not, and the process follows the new card registration process flow diagram illustrated in Figure 3 beginning at step 314. If it is determined that a token has already been registered, the purchase card scheme data processing application 114 process proceeds to step 808 where the security parameters associated with the token 206 are identified and retrieved from column 724 of the relevant card record in the customer ID table 702.

In one embodiment, the purchase card scheme data processing application 114 queries meta data fields associated with the registered token 206 to identify the security parameters associated with the token 206. For example, in such an arrangement, token 206 is looked up in a token value field 706 of card ID table 700 to identify the corresponding customer ID associated with the registered token 206. The corresponding customer ID is then identified in customer ID table 702 and the record comprising the relevant security parameter fields is identified.

The identified security parameters associated with the registered token 206 are compared to the identified purchase/withdrawal parameters transmitted to the purchase scheme data processing application 114, step 810. Responsive to a determination that the security parameters are satisfied, process control flows to step 818 and the transaction is approved. If the security parameters are not satisfied, process control flows to step 812 where the purchase scheme data processing application 114 sends a Short Message Service (SMS) message comprising the identified purchase/withdrawal parameters and requesting authorisation to proceed with the transaction to the customer's mobile phone 122, step 812.

Responsive to receiving the SMS message comprising the identified purchase/ withdrawal parameters along with the request for authorisation, the customer 120 may respond by inputting a PIN or password at the mobile device 122 before the transaction can be authorised, step 814. The PIN/ password is transmitted to the purchase card scheme data processing application 114 where it is compared to the PIN/ password stored in column 726 of table 702 associated with the registered token 206. Responsive to a determination by the purchase card scheme data processing application 114 that the PIN or password entered by the customer 120 is incorrect, the purchase/ withdrawal will be declined, step 816. If the PIN or password entered by the customer 120 is correct, process flows to step 818 and the purchase/ withdrawal is approved. In a simplistic embodiment, no PIN or password is required merely confirmation of authorisation to proceed or not.

In another embodiment the purchase scheme data processing application 114 sends an SMS message containing a randomly generated 'one time' PIN to the customer mobile phone 122. Responsive to receiving the SMS message containing the 'one time' PIN, the customer inputs the 'one time' PIN at the payment terminal before the purchase/ withdrawal is approved.

In another embodiment, the purchase scheme data processing application 114 sends a message requesting authorisation to proceed with the transaction to the customer's email address at step 812.

Utilising this pre-transaction layered security approach, identification of the cardholder presenting the payment account for tokenisation may be verified or at least authorisation by the cardholder may be verified to a reasonable degree of certainty because the authorisation is responsive to a message to the mobile telephone number registered to the cardholder and if implemented a PIN or password has been submitted and approved.

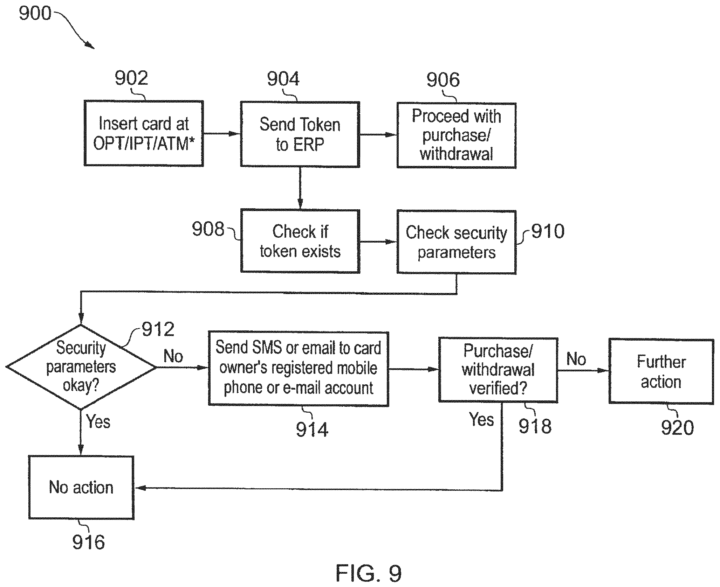

The operation of the purchase card scheme data processing application 114, in particular the management of a token 206 with associated post transaction security parameters and the interface with a customer 120 will now be described in accordance with another embodiment of the present invention 900 illustrated in Figure 9.

As will be apparent to a person of ordinary skill in the art, the steps illustrated in Figure 9 are distributed across the card reader module 106a, registration module 106b, a purchase card operator server 112 and a customer mobile device 122 illustrated in Figure 2 for example.

A customer inserts an EMV payment card at a payment terminal 106, step 902, and a token 206 based on the EMV payment card details is created and transmitted to the purchase card scheme data processing application 114 on server system 112, step 904. Process then flows to step 906 where the purchase/ withdrawal proceeds. In the described embodiment the payment terminal is an Automatic Teller Machine (ATM). However, in another embodiment the payment terminal may be an Outside Payment Terminal (OPT) or an Inside Payment Terminal (IPT).

Concurrently at step 904, the relevant purchase/withdrawal parameters, such as good or service or type of good or service (product/s), identification of retailer, geographic location or retailer, value of transaction amongst other things are transmitted to the purchase card scheme data processing application 114 on server system 112.

The purchase card scheme data processing application 114 then checks in the database at server 112 to determine if the token 206 has already been registered, i.e. the customer is already a user, step 908. If at step 908 it is determined that the token 206 has not yet been registered, a message is transmitted to the payment terminal to initiate a question being presented to the user interface asking whether the customer 120 would like to register the token 206 or not, and the process follows the new card registration process flow diagram illustrated in Figure 3 beginning at step 314. If it is determined that the token 206 has already been registered, the purchase card scheme data processing application 114 process proceeds to step 910 where the security parameters associated with the token 206 are identified and retrieved from column 724 of the relevant card record in the customer ID table 702.

In one embodiment, the purchase card scheme data processing application 114 queries meta data fields associated with the registered token 206 to identify the security parameters associated with the token 206. For example, in such an arrangement, token 206 is looked up in a token value field 706 of card ID table 700 to identify the corresponding customer ID associated with the registered token 206. The corresponding customer ID is then identified in customer ID table 702 and the record comprising the relevant security parameter fields is identified.

The identified security parameters associated with the registered token 206 are compared to the identified purchase/ withdrawal parameters transmitted to the purchase scheme data processing application 114, step 912. Responsive to a determination that the security parameters are satisfied, process flows to step 916 and no further action is taken.

If the security parameters are not satisfied, process flows to step 914 where the purchase scheme data processing application 114 sends a Short Message Service (SMS) message to the customers mobile device 122 comprising the identified purchase/ withdrawal parameters and requesting verification of the transaction by the customer 120.

Responsive to receiving the SMS message comprising the identified purchase/ withdrawal parameters along with the request for verification, the customer 120 may respond by inputting a PIN or password at the mobile device 122. The PIN/ password is transmitted to the purchase card scheme data processing application 114 where it is compared to the PIN/ password stored in column 726 of table 702 associated with the registered token 206.

Responsive to a determination by the purchase card scheme data processing application 114 that the PIN or password entered by the customer 120 is incorrect, step 918, process flows to step 920 where further action is taken i.e. cancellation of the payment card.

If at step 918 the purchase scheme data processing application 114 determines that the PIN or password entered by the customer 120 is correct, process flows to step 916 and no further action is taken. In a simplistic embodiment, no PIN or password is required merely confirmation of authorisation to proceed or not.

Utilising this post-transaction layered security approach, verification of the transaction by cardholder presenting the payment account for tokenisation may prevent further unauthorised transactions using the payment card or at least authorisation by the cardholder may be verified to a reasonable degree of certainty because the authorisation is responsive to a message to the mobile telephone number registered to the cardholder and if implemented a PIN or password has been submitted and approved.

Beneficially, the payment information itself is not stored at the purchase card scheme operator server 112, limiting the exposure and risk of conducting transactions. In addition, by associating one or more restrictions with a token, checks can be applied based on the token and the customer further limits the risk of an unauthorised entity conducting transactions with the credit or debit cards in the event they are lost or stolen. An unauthorised entity that gains access to the credit or debit cards will be restricted in the use of the payment card based on the restrictions selected by the customer. By utilizing a token to apply use restrictions, the use restrictions may be managed and applied outside of a PCI DSS compliant environment and managed by a third party other than the financial institution/merchant acquirer issuing the payment card.

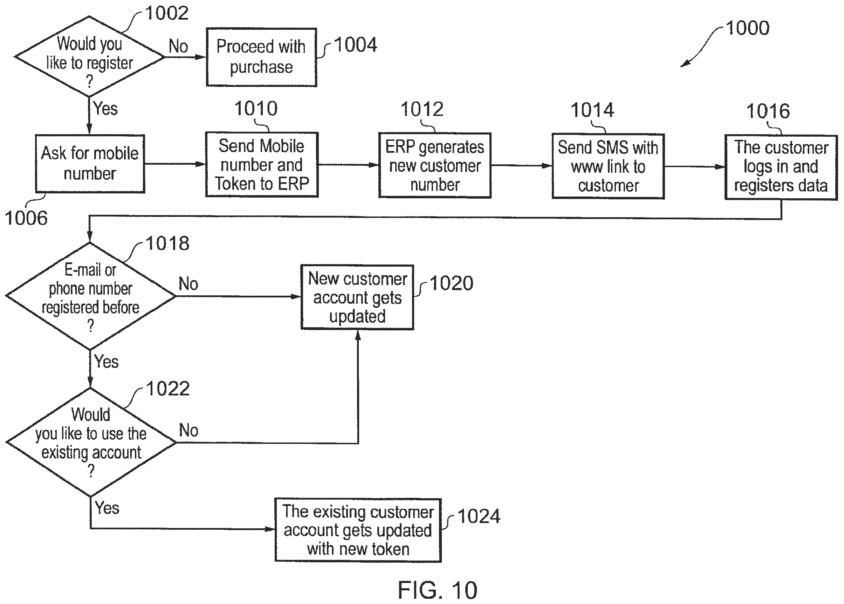

One or more embodiments may be configured to permit an existing user to register further or existing cards to the system. An example of the operation of such an embodiment will now be described with reference to the process flow control diagram 1000 illustrated in Figure 10 of the accompanying drawings.

As will be apparent to a person of ordinary skill in the art the steps illustrated in Figure 10 are distributed across the card reader module, registration module and purchase card operator server illustrated in Figure 2 for example. At an appropriate point in a transaction process 1000, for example after a card has been inserted into the card reader, the card details are tokenised and the purchase card operator's system is interrogated for the token and if no corresponding token is found, a message is displayed asking the user if they would like to register the card inserted in the card reader, step 1002. If the user responds "No", for example, pressing a designated key on a keypad or a "soft key" on a touch sensitive display, the system proceeds with the transaction procedure, step 1004. If the user responds with a "Yes" then process control flows to step 1006 where a message is displayed requesting the user's mobile telephone number.

The mobile telephone number input at step 1006 is transmitted to the purchase card scheme operator server 112 together with what may be termed a "new" token, step 1010, and the purchase card operator application 114 generates a new user (customer) ID number, step 1012. An SMS message comprising a URL link is transmitted to the user's (customer's) mobile telephone at step 1014.

The user/customer may activate the URL link, if it is a hot link, which automatically launches a web browser session or inputs it into a web browser to access the web page for the purchase card operator application that provides an interface for a user/customer to input their personal data for association with the new token uploaded to the application. The purchase card operator application then searches its database for one or more elements of the user/customer details just input, for example an email or telephone number, step 1018. If no corresponding detail or details can be found a new user/customer account is created, step 1020.

If one or more of the details are found in the purchase card operator's database then a message is displayed through the web browser asking the user/customer if they would like to use the existing account, step 1022. If the user/customer answers "No" process control flows to step 1020 and a new account is created for the recently uploaded token representing the new card and process flows to the card specification process, step 806 and product and security restrictions may be associated with the new card. Otherwise, process control flows to step 1024 where the existing customer account having the corresponding details is updated with the new token and process flows to the card specification process, step 806 and product and security restrictions may be associated with the new card. In the described embodiment, the existing customer account may be updated by inserting their existing user identity into the relevant table.

Thus, a user/customer may link further cards to their account.

In summary and general outline, the processing of EMV data requires a PCI DSS environment to ensure that sensitive information are not compromised when making a transaction. Such security controls require a high security IT and physical environment to operate in, which by its very nature means higher costs are placed on this type of data handling. Tokenisation is a process by which the whole transaction is decoupled from the sensitive EMV data and replaced by a special and unique token number enabling secure data to be anomalous, allowing easier processing and reduced costs. It also allow for other benefits, such as data analytics and manipulation for various added value services such as purchase restrictions and security parameters associated with a token.

The Applicant has developed a novel method of enhancing card data security during and after the transaction process based on layered security parameters. In some instances, principally when the token replaces the sensitive payment data for use in a transaction or similar situation, simply replacing the sensitive payment data with a token doesn't address the risk of an unauthorised entity using the stolen payment credentials and having a valid token assigned to the sensitive payment data.

The present invention addresses this by identifying critical parts of the tokenisation process to verify that the cardholder presenting the payment account for tokenisation is the valid cardholder.

As disclosed embodiments of the present invention refer to several possible methods i.e. pre-transaction and post-transaction security enhancement methods, that may be performed via card issuer authorisation and/or verification of the card holder. The disclosed methods may be utilised to assign an assurance level to each token that will be used to transact. Thus the disclosed methods are critical to tokenisation initiatives to prevent fraudulent use of payment card data.

In summary the disclosed enhanced security methods utilise a layered approach comprising four different technologies; EMV, Encryption, tokenisation and authorisation/ verification by a customer through an external mobile device, wherein the degree of layering may be adjusted based on the needs of the entity, industry requirements and regulations etc.

Cardholder authentication/ verification allows for optimisation of the current transaction process infrastructure without interfering with card systems technology, therefore helping to protect the integrity of cardholders personal financial information during transaction whilst avoiding the capital equipment cost in building a bespoke or new system and PCI compliant infrastructure and storage for anti-skimming purposes. In simple terms, the existing PCI DSS compliant systems are used to handle card data and generate tokens while a non-compliant system may be used to create a security specification for a particular token and to test transaction parameters against that security specification for a transaction involving a card corresponding to the token.

In addition, tokenisation has provided new data fields to provide richer information about the transaction, which can help improve fraud detection and expedite the approval process. Furthermore, the method utilises a common standard design to simplify the process for merchants for contactless, online or other transactions.

Insofar as embodiments of the invention described above are implementable, at least in part, using a software-controlled programmable processing device such as a general purpose processor or special-purposes processor, digital signal processor, microprocessor, or other processing device, data processing apparatus or computer system it will be appreciated that a computer program for configuring a programmable device, apparatus or system to implement the foregoing described methods, apparatus and system is envisaged as an aspect of the present invention. The computer program may be embodied as any suitable type of code, such as source code, object code, compiled code, interpreted code, executable code, static code, dynamic code, assembly code and the like. The instructions may be implemented using any suitable high-level, low-level, object-oriented, visual, data-oriented, data structured, compiled and/or interpreted programming language, such as C, C++, Java, BASIC, Perl, Matlab, Pascal, Visual BASIC, JAVA, ActiveX, assembly language, machine code, and so forth. A skilled person would readily understand that term "computer" in its most general sense encompasses programmable devices such as referred to above, and data processing apparatus and computer systems in whatever format they may arise, for example, desktop personal computer, laptop personal computer, tablet, smart phone or other computing device.

Suitably, the computer program is stored on a carrier medium in machine readable form, for example the carrier medium may comprise memory, removable or non-removable media, erasable or non-erasable media, writeable or re-writeable media, digital or analogue media, hard disk, floppy disk, Compact Disk Read Only Memory (CD-ROM), Compact Disk Recordable (CD-R), Compact Disk Rewriteable (CD-RW), optical disk, magnetic media, magneto-optical media, removable memory cards or disks, various types of Digital Versatile Disk (DVD) subscriber identity module, tape, cassette solid-state memory. The computer program may be supplied from a remote source embodied in the communications medium such as an electronic signal, radio frequency carrier wave or optical carrier waves. Such carrier media are also envisaged as aspects of the present invention.

As used herein any reference to "one embodiment" or "an embodiment" means that a particular element, feature, structure, or characteristic described in connection with the embodiment is included in at least one embodiment. The appearances of the phrase "in one embodiment" or the phrase "in an embodiment" in various places in the specification are not necessarily all referring to the same embodiment.

As used herein, the terms "comprises," "comprising," "includes," "including," "has," "having" or any other variation thereof, are intended to cover a non-exclusive inclusion. For example, a process, method, article, or apparatus that comprises a list of elements is not necessarily limited to only those elements but may include other elements not expressly listed or inherent to such process, method, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

In addition, use of the "a" or "an" are employed to describe elements and components of the invention. This is done merely for convenience and to give a general sense of the invention. This description should be read to include one or at least one and the singular also includes the plural unless it is obvious that it is meant otherwise.

In view of the foregoing description it will be evident to a person skilled in the art that various modifications may be made within the scope of the invention. For example, although an embodiment of the invention has been described with reference to a payment terminal 106 having a single controller implementing separate card reader module 106a and point-of-sale module 106b with respective controllers and display drivers 208/210 and 214/216 it will be evident to a person of ordinary skill in the art that the separate modules, controllers and display drivers may be combined into a single module, controller and display driver. Indeed, the display driver need not be a separate module from the controller.

Additionally, the functions of the tokenisation sub-module 212 and registration sub-module 220 may be integrated with one or more controllers. Furthermore, although tokenisation is generally considered to comprise a non-predictable, one-way, irreversible function to generate a string of characters from initial data which generally excludes encryption because encryption involves use of a key for decryption it will be evident to a person of ordinary skill in the art that encryption techniques could be used in the tokenisation process and indeed a reversible encryption algorithm could be utilised to generate a token which could be used in one or more embodiments of the present invention. Consequently, the term "tokenisation" and related and derived terms are not limited to embodiments in which the token character string is generated in irreversible random or pseudorandom way but may include a token character string been generated using an encryption algorithm.

The terms "customer" and "user" may refer to the same person where a purchaser of a good or service is also a user of the purchase card system. Optionally, the term "customer" may refer to a purchaser of a good or service not a user, or not yet a user, of the purchase card system. Likewise, the term "user" may be used to refer to a person who is a member of the purchase card system when they are making a purchase using an EMV card and not a purchase card scheme card. Consequently, the terms "customer" and "user" may be used interchangeably or to refer to different categories of person depending upon the context as appropriate. The terms "customer" and "user" are not intended to unduly limit the scope of the disclosure or appended claims and they should be construed in accordance with the context in which they are used.

Although embodiments of the invention have been described with reference to mobile telephone numbers being input to a POS other or additional suitable contact details may be used such as an email address. Additionally, the terms "card details" and "card data" are used interchangeably and are intended to refer to the same thing unless the context requires otherwise.

The completion of registration details by inputting personal data may be performed immediately following the transaction initiating registration, for example through a web browser provided on a smart phone. However, it is likely to be done at a later time at the user's convenience.

Although one or more embodiments have been described with reference to registered prices, discounts, security parameters and purchase restrictions such are only examples of restriction parameters that may define a restriction specification associated with a token. Other restrictions and parameters may be utilized additionally or optionally to define a restriction specification.

The described embodiments utilise the same tokenization key as is used in payment terminals. However, the tokenization key need not be the same as used for tokenising the card details for other purposes. That is to say different tokens may be created from a payment card details for different purposes.

Although embodiments have been described with reference to EMV payment cards, similar principles and approach may be taken with purchase cards or any other portable conveyor or repository of data fraudulent use of which is to be inhibited. Additionally, although embodiments have been described in which a payment terminal is part of an ATM the teaching and scope of the present disclosure encompasses an embodiment comprising solely an ATM without the additional functionality and modules of a payment terminal.

Embodiments have been described with reference to payment cards, e.g. credit or debit cards, but the teaching may be applied to purchase cards, e.g. fuel cards. Payment cards and purchase cards may collectively be referred to as value transfer cards.

For the avoidance of doubt, the term "transaction" is not limited to a purchase of a good or service but includes within its meaning, subject to context, an activity, function or service undertaken or provided

The scope of the present disclosure includes any novel feature or combination of features disclosed therein either explicitly or implicitly or any generalisation thereof irrespective of whether or not it relates to the claimed invention or mitigate against any or all of the problems addressed by the present invention. The applicant hereby gives notice that new claims may be formulated to such features during prosecution of this application or of any such further application derived therefrom. In particular, with reference to the appended claims, features from dependent claims may be combined with those of the independent claims and features from respective independent claims may be combined in any appropriate manner and not merely in specific combinations enumerated in the claims.

Yet further aspects and embodiments are enumerated with reference to the following numbered clauses.
1. A method for enhancing value transfer card data security comprising:
   generating at a terminal compliant with a security requirement for payment cards a token from a value transfer card data;
   providing the token to a data processing environment non-compliant with a security requirement for payment cards;
   associating with the token a security specification defining at least one security parameter for the value transfer card; and
   storing the token and security specification in the non-compliant data processing environment.
2. A method according to clause 1, further comprising receiving the at least one security parameter at the non-compliant data processing environment from a user of the value transfer card.
3. A method according to clause 2, further comprising providing a value transfer card user interface to the non-compliant data processing environment for the value transfer card user to input the at least one security parameter to the non-compliant data processing environment.
4. A method according to clause 3, further comprising receiving the at least one security parameter at the non-compliant data processing environment over the value transfer card user interface and configuring the security specification with the at least one security parameter.
5. A method according to any preceding clause, wherein the terminal comprises a payment card terminal.
6. A terminal for enhancing value transfer card data security, the terminal configured to:
   generate in a data processing environment compliant with a security requirement for payment cards a token from a value transfer card data;
   provide the token to a data processing environment non-compliant with a security requirement for payment cards;
   associate with the token a security specification defining at least one security parameter for the value transfer card; and
   store the token and security specification in the non-compliant data processing environment.
7. A terminal according to clause 6, further configured to receive the at least one security parameter at the non-compliant data processing environment from a user of the value transfer card.
8. A terminal according to clause 7, further configured to provide a value transfer card user interface to the non-compliant data processing environment for the value transfer card user to input the at least one security parameter to the non-compliant data processing environment.
9. A terminal according to clause 8, further configured to receive the at least one security parameter at the non-compliant data processing environment over the value transfer card user interface and configure the security specification with the at least one security parameter.
10. A terminal according to any of clauses 6 to 9, wherein the terminal is a payment card terminal.

## Claims

1. A method for authorising a value transfer card transaction, the method, carried out in a data processing environment non-compliant with a security requirement for payment cards, comprising:
receiving a token derived from a value transfer card details input to a value card reader for execution of a transaction;
identifying a security specification comprising at least one security parameter associated with the token;
receiving at least one transaction parameter corresponding to the transaction;
determining whether the at least one transaction parameter submitted to the non-compliant data processing environment satisfies the at least one identified security parameter; and
providing a response to the a value card reader comprising the determination.

2. A method according to claim 1, comprising initiating transmission of a message to a user of the value transfer card, wherein the message invites a response to authorise or inhibit fulfilment of the transaction.

3. A method according to claim 1 or 2, further comprising inhibiting fulfilment of the transaction with the value transfer card submitted to the value transfer card reader in response to receiving, at the non-compliant data processing environment, a message from a user of the payment card comprising an indication that the transaction is unauthorised.

4. A method according to claim 1 or 2, wherein initiating fulfilment of the transaction is carried out prior to a determination whether or not the transaction parameters submitted to the non-compliant data processing environment satisfy the at least one security parameter associated with the token.

5. A method according to any of claims 1 to 4, further comprising generating the token from the value transfer card details input to the value card reader for execution of the transaction and transmitting the token and the at least one transaction parameter to the non-compliant data processing environment.

6. A method according to any of claims 1 to 5, wherein the value transfer card comprises a payment card and the step of generating the token is carried out in a terminal compliant with a security requirement for payment cards.

7. A terminal for authorising a value transfer card transaction, the terminal comprising a data processing environment non-compliant with a security requirement for payment cards and configured to:
receive a token derived from a value transfer card details input to a value card reader for execution of a transaction;
identify a security specification comprising at least one security parameter associated with the token;
receive at least one transaction parameter corresponding to the transaction;
determine whether the at least one transaction parameter submitted to the non-compliant data processing environment satisfies the at least one identified security parameter; and
provide a response to the a value card reader comprising the determination.

8. A terminal according to claim 7, further configured to initiate transmission of a message to a user of the value transfer card, wherein the message invites a response to authorise or inhibit fulfilment of the transaction.

9. A terminal according to claim 7 or 8, further configured to inhibit fulfilment of the transaction with the value transfer card submitted to the value transfer card reader in response to receiving, at the non-compliant data processing environment, a message from a user of the payment card comprising an indication that the transaction is unauthorised.

10. A terminal according to claim 7 or 8, further configured to initiate fulfilment of the transaction prior to a determination whether or not the transaction parameters submitted to the non-compliant data processing environment satisfy the at least one security parameter associated with the token.

11. A system comprising a terminal according to any of claims 7 to 10 and comprising the value card reader, the value card reader configured to generate the token from the value transfer card details input to the value card reader for execution of the transaction and to transmit the token and the at least one transaction parameter to the non-compliant data processing environment.

12. A terminal according to any of claims 7 to 10 or a system according to claim 21, wherein the value transfer card comprises a payment card the value card reader further comprising a data processing environment compliant with a security requirement for payment cards and configured to generate the token from payment card details input to the card reader.
